# EUROPEAN PATENT SPECIFICATION

(11) **EP 2 579 637 B1**
(45) Date of publication and mention of the grant of the patent: **02.04.2014**
(21) Application number: 11786021.3
(22) Date of filing: 06.05.2011
(51) Int. Cl.: H04W 12/12, H04W 80/12, H04L 29/06

(54) **METHOD AND APPARATUS FOR MONITORING PROCESS OF SUBSCRIBING WAP SERVICES**
VERFAHREN UND VORRICHTUNG ZUR ÜBERWACHUNG DES FORTSCHRITTS IN WAP-TEILNEHMERDIENSTEN
PROCÉDÉ ET APPAREIL POUR LA SURVEILLANCE D'UN TRAITEMENT D'ABONNEMENT À DES SERVICES WAP

(30) Priority: 28.05.2010 CN 201010193907
(43) Date of publication of application: 10.04.2013
(73) Proprietor: Huawei Technologies Co., Ltd., Shenzhen, Guangdong 518129 (CN)
(72) Inventor: LI, Shouping, Guangdong 518129 (CN)
(74) Representative: Goddar, Heinz J.
(86) International application number: PCT/CN2011/073746
(87) International publication number: WO 2011/147249

(56) References cited:
- WO-A1-2004/112346
- CN-A- 101 304 434
- CN-A- 101 378 551
- CN-A- 101 635 895
- US-A1- 2008 065 746
- US-B1- 7 120 148
- Juniper Networks: "NetScreen ScreenOS 5.0.0 GPRS. Reference Guide", , 2004, XP002690861, Retrieved from the Internet: URL:http://www.juniper.net/techpubs/softwa re/screenos/screenos5x/screenos5xgprs/GPRS .pdf [retrieved on 2013-01-23]

## Description

### FIELD OF THE INVENTION

The present invention relates to the field of wireless communications technologies, and in particular, to a method and an apparatus for monitoring a WAP service subscribing process.

### BACKGROUND OF THE INVENTION

With rapid development of WAP (Wireless Application Protocol, wireless application protocol) services, attacks aimed at the WAP services become more and more frequent. Implanting an unauthorized program in a WAP system is a common WAP service attack means. This attack manner specifically is that, the unauthorized program is implanted in the WAP system, and the unauthorized program constructs a service subscription request message (the unauthorized service subscription request message carries a mobile phone number of another person) to send to a service processing system, and then performs second confirmation on the subscription message, so as to implement unauthorized service subscription, thereby making profits illegally.

During the implementation process of the present invention, the prior art at least has the following problems.

The existing WAP service subscribing procedure lacks an effective security protection mechanism. After the unauthorized program is implanted in the WAP system, the system can-not identify an unauthorized message, and therefore the WAP services are under unauthorized subscription or used for free, thereby causing economic losses of an authorized user or an operator.

Document US 2008/0065746 A1 describes a consumer configurable mobile communication web filtering solution. It discloses a user configurable system and method specifically designed to configure usage restrictions of one or more mobile communication devices, as well as provide a mechanism at the carrier's network to lookup the mobile phone number based on an IP address for filtering web content.

The document "NetScreen ScreenOS 5.0.0 GPRS. Reference Guide", 2004, by Juniper Networks, describes the GTP features of ScreenOS GPRS and demonstrates how to configure GTP functionality on a NetScreen device.

Document US 7 120 148 B1 describes a method for communicating in a wireless application protocol (WAP) network environment that includes receiving a request packet at a WAP gateway and positioning an identifier into the request packet. A content switch then identifies the identifier and correlates the identifier to a source that generated the request packet. An internet protocol (IP) address associated with the source is positioned in the request packet before communicating the request packet to a next destination.

Document WO 2004/112346 A1 describes communications systems and methods for controlling transportation data. The methods commonly include entering state information associated with a data transportation connection in a state information record maintained in a data processing entity. The data transportation connection is normally established between user equipment and a node, commonly via a gateway node, and the data processing entity is typically configured to control transportation of data based on the state information table. The methods also usually include detecting that the data transportation connection is deactivated for the user equipment, sending information from the gateway node that the user equipment cannot be reached, and, in response to the information, deleting the state information from the state information record. The systems generally allow for implementation of the methods.

### SUMMARY OF THE INVENTION

Embodiments of the present invention provide a method and an apparatus for monitoring a WAP service subscribing process so as to effectively improve security of a WAP service subscribing procedure.

A first aspect of present invention provides a method for monitoring a WAP service subscribing process, where the method includes:
caching information of a service to be subscribed by a corresponding request terminal and
information of the corresponding request terminal that are obtained from an egress of an access network gateway;
obtaining a service request message of the corresponding request terminal from an egress of a wireless application protocol WAP gateway which communicates with the access network
gateway, and obtaining the information of the service to be subscribed and the information of the corresponding request terminal in the service request message, wherein the information of the service to be subscribed comprises a network address of the service to be subscribed, and the information of the request terminal comprises identification information of the request terminal;
judging whether the cached information of the service to be subscribed and the information of the corresponding request terminal that are obtained from the egress of the access network gateway include the information of the service to be subscribed and the information of the corresponding request terminal that are obtained from the egress of the WAP gateway;
if a judgment result is yes, continuing a WAP service subscribing procedure; and
if the judgment result is no, sending alarm information.

A second aspect of the present invention provides an apparatus for monitoring a WAP service subscribing process, where the apparatus includes:
a first monitoring module, set at an egress of an access network gateway, and configured to obtain information of a service to be subscribed by a corresponding request terminal and information of the corresponding request terminal;
a caching module, configured to cache the information obtained by the first monitoring module;
a second monitoring module, set at an egress of a wireless application protocol WAP gateway which communicates with the access network gateway, and configured to obtain a service request message of the request terminal, and obtain the information of the service to be subscribed and the information of the corresponding request terminal in the service request message, wherein the information of the service to be subscribed comprises a network address of the service to be subscribed, and the information of the request terminal comprises identification information of the request terminal;
a service judging module, configured to judge whether the information cached by the caching module includes the information of the service to be subscribed and the information of the corresponding request terminal that are obtained by the second monitoring module; and
a service processing module, configured to continue a WAP service subscribing procedure when a judgment result of the service judging module is yes, and send alarm information when the judgment result of the service judging module is no.

It can be seen from the technical solutions provided in the foregoing embodiments of the present invention that, in the embodiments of the present invention, through comparing the information obtained from the egress of the WAP gateway with the information obtained from the egress of the access network gateway to judge whether WAP service subscription is authorized, an act of subscribing to the WAP service by implanting the unauthorized program in the WAP gateway is effectively prevented, thereby avoiding the economic losses of an authorized user or an operator.

### BRIEF DESCRIPTION OF THE DRAWINGS

To illustrate the technical solutions of the embodiments of the present invention more clearly, the accompanying drawings required for describing the embodiments are introduced briefly in the following. Apparently, the accompanying drawings in the following description are only some embodiments of the present invention, and persons of ordinary skill in the art can further derive other drawings according to these accompanying drawings without creative efforts.
FIG. 1 is a flow chart of a method according to an embodiment of the present invention;
FIG. 2 is a schematic structural diagram of a system according to an embodiment of the present invention;
FIG. 3, including 3A, 3B, and 3C, is a signaling flow chart of a first embodiment of the present invention;
FIG. 4, including 4A, 4B, and 4C, is a signaling flow chart of a second embodiment of the present invention;
FIG. 5 is a schematic structural diagram of an apparatus according to an embodiment of the present invention.

### DETAILED DESCRIPTION OF THE EMBODIMENTS

The technical solutions in the embodiments of the present invention are clearly and completely described in the following with reference to the accompanying drawings in the embodiments of the present invention. Apparently, the embodiments to be described are only a part rather than all of the embodiments of the present invention. All other embodiments obtained by persons of ordinary skill in the art based on the embodiments of the present invention without creative efforts shall fall within the protection scope of the present invention.

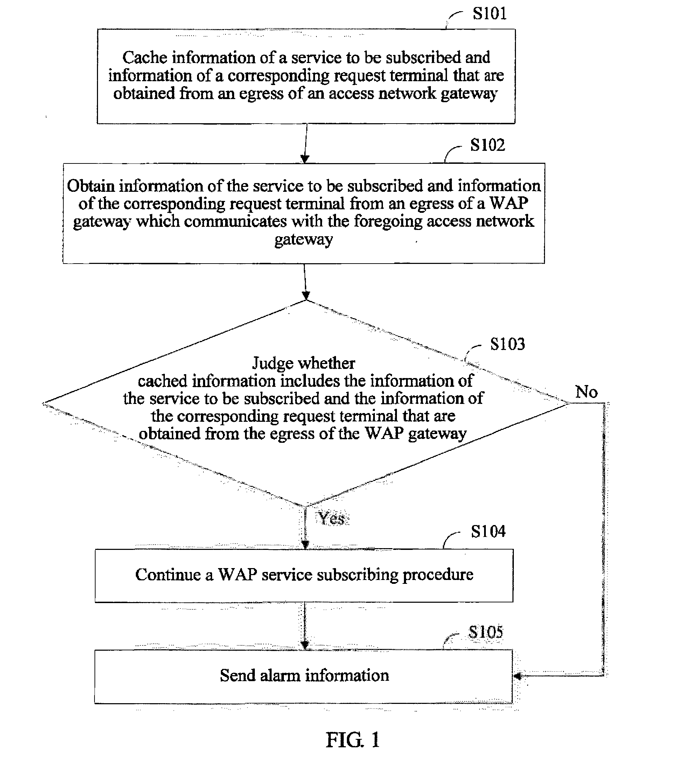

In order to improve security of a WAP service subscribing process, an embodiment of the present invention provides a method for monitoring a WAP service subscribing process. The procedure of the method is shown in FIG 1, and the specific implementation manner is as follows:
S101: Cache information of a service to be subscribed and information of a corresponding request terminal that are obtained from an egress of an access network gateway
S102: Obtain information of a service to be subscribed and information of a corresponding request terminal from an egress of a WAP gateway which communicates with the foregoing access network gateway.
S103: Judge whether the foregoing cached information of the service to be subscribed and information of the corresponding request terminal that are obtained from the egress of the access network gateway include the foregoing information of the service to be subscribed and the information of the corresponding request terminal that are obtained from the egress of the WAP gateway.

If a judgment result is yes (that is, the cached information includes the information of the service to be subscribed and the information of the corresponding request terminal that are obtained from the egress of the WAP gateway), perform S104: continue a WAP service subscribing procedure.

If the judgment result is no (that is, the cached information at least does not include one of the following information: the information of the service to be subscribed and the information of the corresponding request terminal that are obtained from the egress of the WAP gateway), perform S105: send alarm information.

In the embodiment of the present invention, a direction of the egress of the WAP gateway refers to a direction in which the WAP gateway sends data to a core network/a service network; and a direction of the egress of the access network gateway refers to a direction in which the access network gateway sends data to the WAP gateway.

In the embodiment of the present invention, the access network gateway refers to a gateway which forwards communication data between the request terminal and the WAP gateway.

In the method provided in the embodiment of the present invention, the information obtained from the egress of the WAP gateway and the information obtained from the egress of the access network gateway are compared, for example, if an unauthorized service request is sent by an unauthorized program which is implanted in the WAP gateway, the service request information cannot be found in the cached information which is obtained from the egress of the access network gateway; thereby judging whether WAP service subscription is authorized, and effectively preventing an act of unauthorized subscription to the WAP service.

In the method provided in the embodiment of the present invention, detection points are set respectively at the egress of the WAP gateway and the egress of the access network gateway which communicates with the WAP gateway, and information obtained by the detection points is parsed to implement the monitoring on the WAP service subscribing process. According to a difference in the detection points obtaining information, the embodiment of the present invention provides two implementation manners for obtaining information.

### Manner 1

The specific implementation manner of the foregoing S 1 02 includes: a detection point which is set at the egress of the WAP gateway obtains a service request message of the request terminal, and parses the service request message to obtain the information of the service to be subscribed and the information of the corresponding request terminal that are in the service request message; the information of the service to be subscribed includes a network address of the service to be subscribed (in the embodiment of the present invention, the address may be an IP address, and may also be a URL (Uniform Resource Location, uniform resource locator) address); the information of the request terminal includes identification information of the foregoing request terminal (in an embodiment of the present invention, the identification information may be a mobile phone number of the request terminal, an IMSI (International Mobile Subscriber Identity, international mobile subscriber identity), or a subscriber pseudo code, and so on). The specific implementation manner of the foregoing S101 includes: a detection point which is set at the egress of the foregoing access network gateway obtains an online request message of the request terminal, parses the online request message to obtain and cache the information of the request terminal, where the information is carried in the online request message; the information of the request terminal includes an IP address of the foregoing request terminal and identification information of the request terminal, and correspondence between the IP address of the request terminal and the identification information of the request terminal is further cached; the detection point which is set at the egress of the foregoing access network gateway also obtains the service request message of the foregoing request terminal, parses the service request message to obtain and cache the information of the service to be subscribed, where the information is carried in the service request message; the information of the service to be subscribed includes the network address of the service to be subscribed, and correspondence between the IP address of the request terminal and the network address of the service to be subscribed is further cached. In the embodiment of the present invention, in order to improve the monitoring efficiency, only a target WAP service that is set may be monitored, and then in S102, specifically, the network address of the service to be subscribed and identification information of the request terminal may be obtained according to preset identification information of the WAP service to be monitored (the identification information may be an IP address of the WAP service, or a URL address of the WAP service, and so on), where the network address of the service to be subscribed is carried in the service request message of a WAP service to be monitored.

In addition, after the judgment, the embodiment of the present invention may further include S106a: the detection point which is set at the egress of the access network gateway obtains an offline request message of the foregoing request terminal, parses the offline request message to obtain the IP address of the request terminal and the identification information of the request terminal that are carried in the offline request message; according to the IP address of the request terminal and the identification information of the request terminal, deletes corresponding IP address of the request terminal and identification information of the request terminal, and the correspondence between the IP address of the request terminal and the identification information of the request terminal, where the corresponding IP address and identification information, and the correspondence are in the cache, and deletes the correspondence between the IP address of the corresponding request terminal and the network address of the service to be subscribed, and the network address of the service to be subscribed, where the correspondence and the network address are in the cache. Accordingly, the specific implementation manner of the foregoing monitoring the WAP service subscribing process is as follows:
S1031a: Judge whether the cached information includes the identification information which is of the request terminal and which is obtained from the egress of the WAP gateway.

If a judgment result of S1031a is yes, perform S1032a: judge whether the cached information includes the corresponding IP address and the correspondence between the identification information of the request terminal and the IP address of the request terminal; if the judgment result of S 1031a is no, perform the foregoing S105.

If a judgment result of S 1 032a is yes, perform S1033a: judge whether the cached information includes a corresponding network address and the correspondence between the IP address of the foregoing request terminal and the network address of the service to be subscribed; if the judgment result of S1032a is no, perform the foregoing S105.

If a judgment result of S1033a is yes, perform S1034a: judge whether the foregoing cached network address is the same as the foregoing network address which is of the service to be subscribed and which is obtained from the egress of the WAP gateway. If the network addresses are the same, the subscription service is regarded as an authorized service, and the foregoing S104 is performed. Otherwise, the subscription service is an unauthorized service, and the foregoing S105 is performed.

### Manner 2

The specific implementation manner of the foregoing S102 includes: a detection point which is set at the egress of the WAP gateway obtains a service request message of the request terminal, and parses the service request message to obtain information of the service to be subscribed and information of the corresponding request terminal that are in the service request message; the information of the service to be subscribed includes a network address of the service to be subscribed, and the information of the request terminal includes identification information of the foregoing request terminal. The specific implementation manner of the foregoing S101 includes: a detection point which is set at the egress of the foregoing access network gateway obtains an online request message of the request terminal, and parses the online request message to obtain and cache information which is of the request terminal and which is carried in the online request message, where the information of the request terminal includes identification information of the foregoing request terminal; the detection point which is set at the egress of the foregoing access network gateway also obtains a service request message of the foregoing request terminal, parses the service request message to obtain and cache information which is of the service to be subscribed and which is carried in the service request message, where the information of the service to be subscribed includes a network address of the service to be subscribed, and caches correspondence between the identification information of the request terminal and the network address of the service to be subscribed. In the embodiment of the present invention, in order to improve the monitoring efficiency, only a target WAP service that is set may be monitored, and then in S102, specifically, the network address of the service to be subscribed and the identification information of the request terminal that are carried in the service request message for a WAP service to be monitored may be obtained according to preset identification information of the WAP service to be monitored. In addition, after the judgment, the embodiment of the present invention further includes S106b: the detection point which is set at the egress of the access network gateway obtains an offline request message of the foregoing request terminal, parses the offline request message to obtain the identification information which is of the request terminal and which is carried in the offline request message; and according to the identification information of the request terminal, deletes the identification information of the corresponding request terminal in the cache, and deletes the correspondence between the identification information of the corresponding request terminal and the network address of the service to be subscribed, and the network address of the service to be subscribed, where the correspondence and the network address are in the cache. Accordingly, the specific implementation manner of the foregoing monitoring the WAP service subscribing process is as follows:
S1031b: Judge whether the cached information includes the identification information which is of the request terminal and which is obtained from the egress of the WAP gateway.

If a judgment result of S 1031b is yes, perform S 1032b: judge whether the cached information includes the corresponding network address and the correspondence between the identification information of the foregoing request terminal and the network address of the service to be subscribed; if a judgment result of S1032b is no, perform the foregoing S105.

If the judgment result of S1032b is yes, perform S1033b: judge whether the foregoing cached network address is the same as the foregoing network address which is of the service to be subscribed and which is obtained from the egress of the WAP gateway. If the addresses are the same, the subscription service is regarded as an authorized service, and the foregoing S104 is performed; otherwise, the subscription service is an unauthorized service, and the foregoing S105 is performed.

The specific implementation manner of the embodiment of the present invention in a practical application process is described in detail in the following.

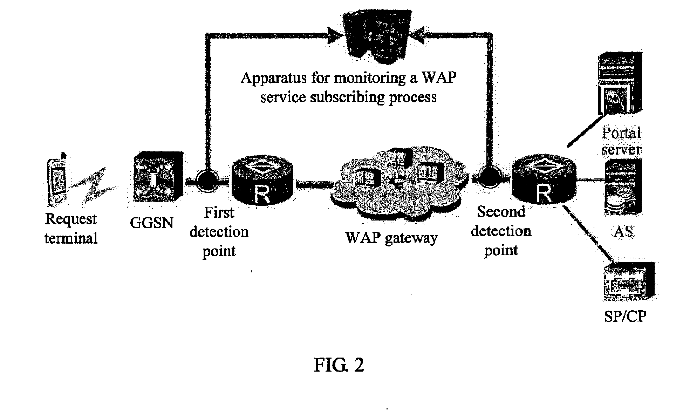

In a network architecture as shown in FIG. 2, a GGSN (Gateway GPRS Support Node, gateway GPRS support node, GPRS General Packet Radio Service, general packet radio technology) as an access network gateway, is in charge of transmitting a communication message between a terminal and a wireless network. The WAP gateway is in charge of transmitting a communication message between the GGSN and a WAP service server. A Portal (a type of webpage application technology) server, an AS (Application Server, application server), and an SP/CP (Service Provider/Content Provider, service provider/content provider) serve to provide network services to the terminal. A first detection point is set at an egress of the GGSN. It should be noted that, although only one GGSN is shown in a schematic diagram of the network architecture in FIG 2, in the practical application process, multiple GGSNs in communication with a same WAP gateway may exist. Accordingly, an egress of each GGSN is set with a first detection point. A second detection point is set at the egress of the WAP gateway. An apparatus for monitoring the WAP service subscribing process is connected to the first detection point and the second detection point to analyze and process monitoring data.

### Embodiment 1

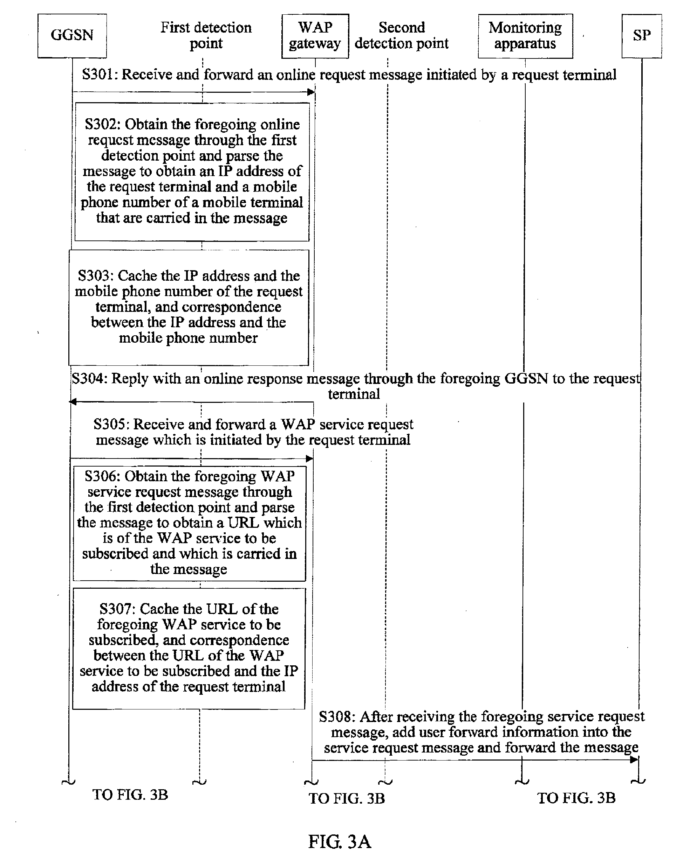

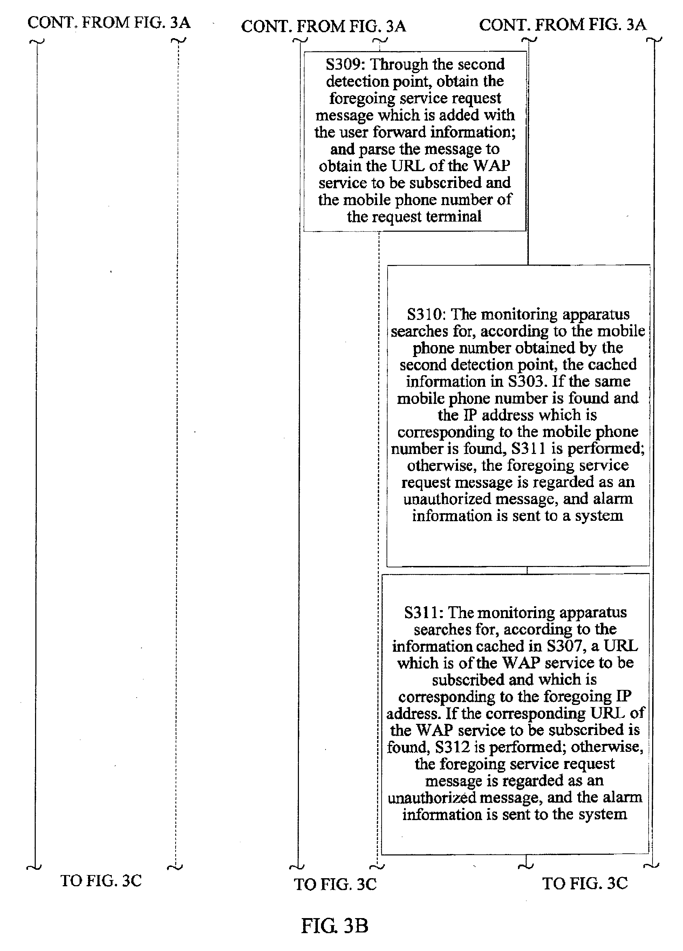

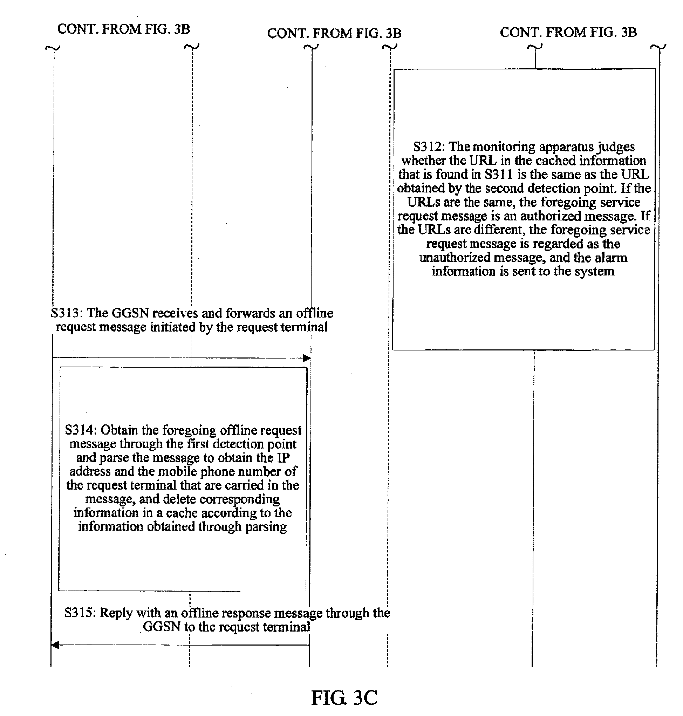

Taking a network architecture as shown in FIG. 2 as an example, a WAP service subscribing procedure in which a monitoring method provided in an embodiment of the present invention is applied is shown in FIG 3, and a specific implementation manner is as follows:
S301 : A GGSN receives and forwards an online request message (Accounting-Request Start) which is initiated by a request terminal.
S302: Obtain the foregoing online request message through a first detection point and parse the message to obtain an IP address of the request terminal and identification information of the mobile terminal that are carried in the message. In this application embodiment, the identification information is a mobile phone number.
S303: Cache the IP address and the mobile phone number of the request terminal, and correspondence between the IP address and the mobile phone number. It is taken as an example rather than limitation that it may be cached in a form of a table. The specific implementation manner is shown in Table 1.

**Table 1**

| | IP address | Mobile phone number |
|---|---|---|
| Request terminal 1 | 211.200.138.0 | 13811122111 |
| Request terminal 2 | 211.200.131.3 | 13400011000 |
| Request terminal N | 211.200.124.0 | 13633355000 |

S304: After receiving the foregoing online request message, a WAP gateway replies with an online response message (Accounting-Response) through the foregoing GGSN to the request terminal.
S305: The GGSN receives and forwards a service request message initiated by the foregoing request terminal.
S306: Obtain the foregoing WAP service request message through the first detection point and parse the message to obtain a network address which is of the WAP service to be subscribed and which is carried in the message. In this application embodiment, the network address is a URL address of the WAP service to be subscribed.
S307: Cache the foregoing URL address of the WAP service to be subscribed, and correspondence between the URL address of the WAP service to be subscribed and the IP address which is of the request terminal and which is obtained in S302. It is taken as an example rather than limitation that it may be cached in the form of a table. The specific implementation manner is shown in Table 2.

**Table 2**

| | IP address | URL of the WAP service to be subscribed |
|---|---|---|
| Request terminal 1 | 211.200.138. 0 | http://www.ietf.org/rfc/rfcl1738.html |
| Request terminal 2 | 211.200.131. 3 | http://rfc.sunsite.dk/rfc/rfc/721.html |
| Request terminal N | 211.200.124. 0 | http://04eld3d7.linkbucks.com |

S308: After receiving the foregoing service request message, the WAP gateway adds user forward information into the service request message and forwards the message. It is taken as an example rather than limitation that the user forward information (the user forward information may be the mobile phone number of the request terminal) may be added through an x-Up-Calling-Line-ID field.
S309: Through a second detection point, obtain the foregoing service request message which is added with the user forward information; and parse the message to obtain the URL address of the WAP service to be subscribed and the mobile phone number of the request terminal.
S310: An apparatus for monitoring a WAP service subscribing process searches for, according to the mobile phone number obtained by the second detection point, the information cached in S303. If the same mobile phone number is found and the IP address which is corresponding to the mobile phone number is found, S311 is performed; otherwise, the foregoing service request message is regarded as an unauthorized message, and alarm information is sent to a system.
S311: The apparatus for monitoring the WAP service subscribing process searches for, according to the information cached in S307, the URL address which is of the WAP service to be subscribed and which is corresponding to the foregoing IP address. If the corresponding URL address of the WAP service to be subscribed is found, S312 is performed; otherwise, the foregoing service request message is regarded as the unauthorized message, and the alarm information is sent to the system.
S312: The apparatus for monitoring the WAP service subscribing process judges whether the URL address which is in a cached message and which is found in S311 is the same as the URL address obtained by the second detection point. If the addresses are the same, the foregoing service request message is regarded as an authorized message. If the addresses are different, the foregoing service request message is regarded as an unauthorized message, and the alarm information is sent to the system.
S313: The GGSN receives and forwards an offline request message (Accounting-Request Stop) which is initiated by the request terminal.
S314: Obtain the foregoing offline request message through the first detection point and parse the message to obtain the IP address and the mobile phone number of the request terminal that are carried in the message, and delete corresponding information in a cache according to the information obtained through parsing. The corresponding information includes the IP address of the request terminal, the mobile phone number of the request terminal, the corresponding URL address of the WAP service to be subscribed, and the correspondence between the IP address and the mobile phone number of the request terminal and between the IP address of the request terminal and the URL address of the WAP service to be subscribed.
S315 : After receiving the foregoing offline request message, the WAP gateway replies with an offline response message (Accounting-Response) through the GGSN to the request terminal.

The foregoing alarm information may include the information of the WAP service to be subscribed and/or the information of the request terminal, so that the system can reserve information of an unauthorized service to facilitate obtaining evidence or actively monitoring the unauthorized service. After sending the alarm information, the apparatus for monitoring the WAP service subscribing process may notify the WAP gateway of stopping the WAP service subscription.

In the foregoing first application embodiment of the present invention, the information of the request terminal is obtained through obtaining and parsing a Radius message (for example, the online request message and the offline request message) at the first detection point. The information of the WAP service to be subscribed and the information of the request terminal are obtained through obtaining and parsing an HTTP message and a WSP message (for example, the service request message) at the first detection point. The information obtained by the two detection points are compared to judge whether the service request message at the egress of the WAP gateway is an authorized service request sent by the request terminal, the security of the WAP service subscribing process is effectively improved, and economic losses of a user and an operator are avoided.

In the practical application process, if all WAP services are monitored, a bandwidth burden of the system may be increased. In consideration of both the security and the monitoring efficiency, the apparatus for monitoring the WAP service subscribing process may set identification information of a target WAP service, and only monitor the target WAP service. It is taken as an example rather than limitation that, Ring Back Tone downloading is set to be the target WAP service, and then the apparatus for monitoring the WAP service subscribing process saves an IP address (for example, 218.200.169.*) of the service. Accordingly, in S309 of the foregoing first application embodiment of the present invention, the URL address of a target WAP service to be subscribed and the mobile phone number of the request terminal are obtained.

### Embodiment 2

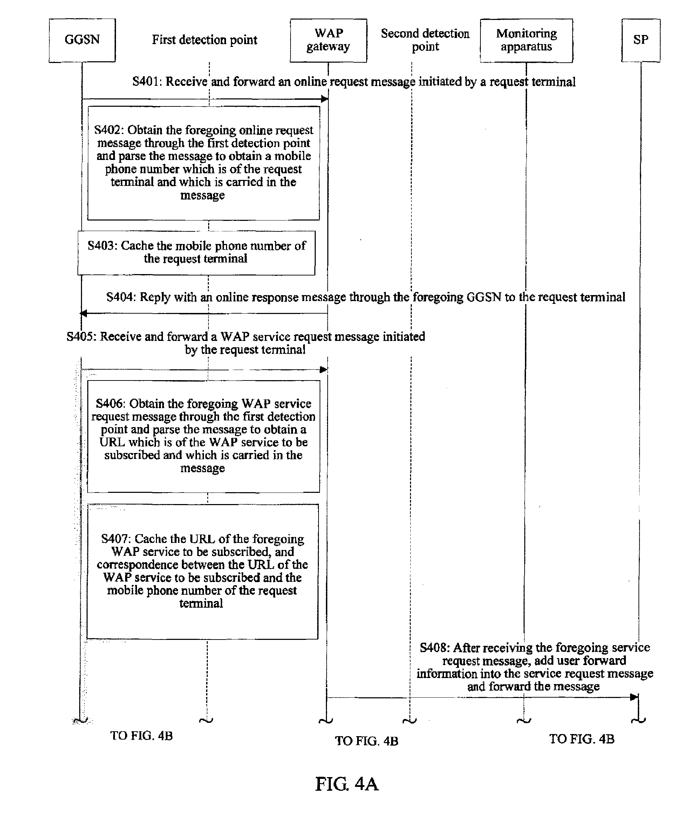

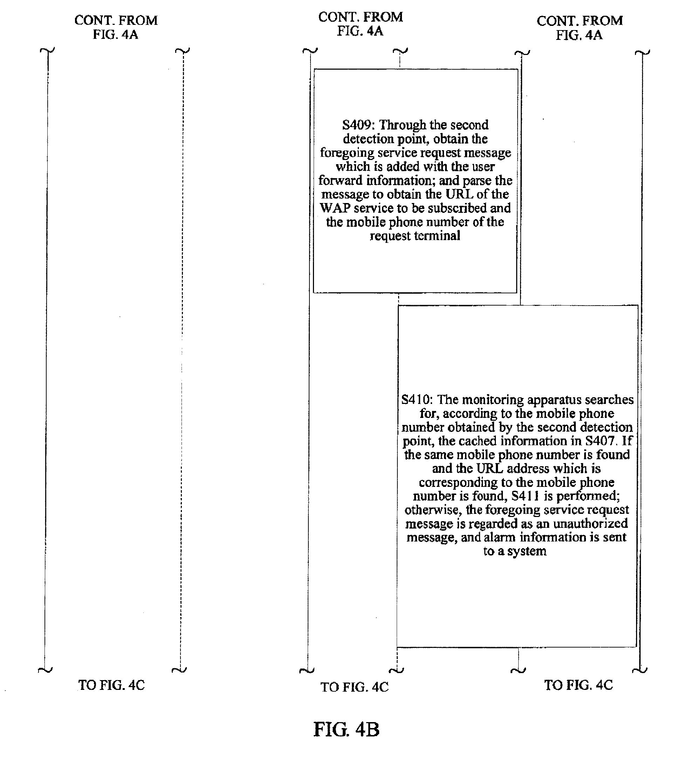

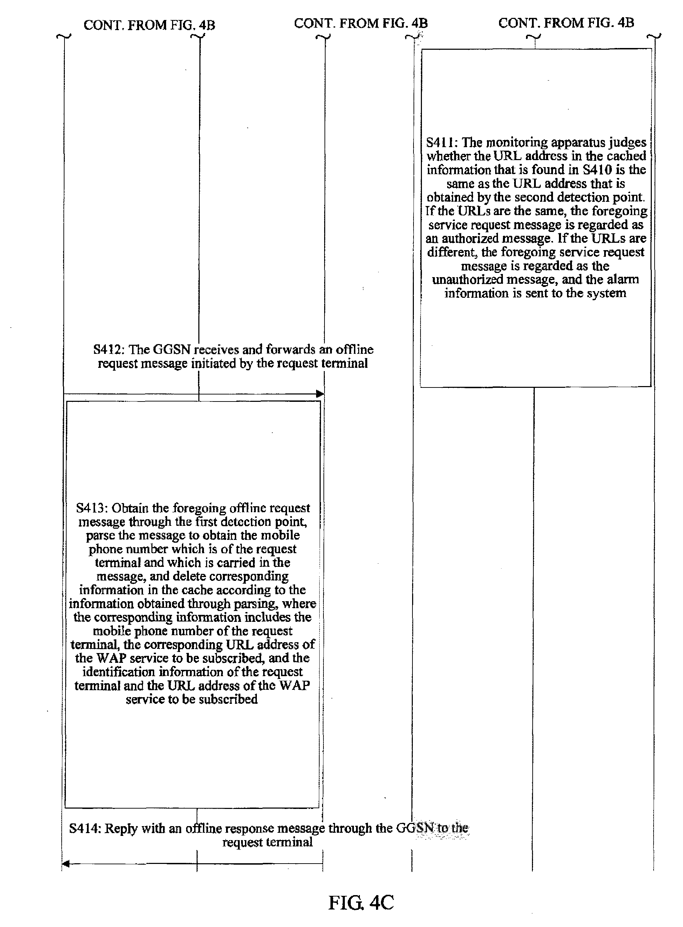

In a second application embodiment provided in the preset invention, a network architecture as shown in FIG. 2 is still taken as an example. Its processing process is shown in FIG. 4, and a specific implementation manner is as follows:
S401 : A GGSN receives and forwards an online request message (Accounting-Request Start) which is initiated by a request terminal.
S402: Obtain the foregoing online request message through a first detection point and parse the message to obtain a mobile phone number which is of the request terminal and which is carried in the message.
S403: Cache the mobile phone number of the request terminal.
S404: After receiving the foregoing online request message, a WAP gateway replies with an online response message (Accounting-Response) through the foregoing GGSN to the request terminal.
S405: The GGSN receives and forwards a service request message initiated by the foregoing request terminal.
S406: Obtain the foregoing WAP service request message through the first detection point and parse the message to obtain a network address which is of a WAP service to be subscribed and which is carried in the message. In this application embodiment, the network address is a URL address of the WAP service to be subscribed.
S407: Cache the URL address of the foregoing WAP service to be subscribed, and correspondence between the URL address of the WAP service to be subscribed and the mobile phone number which is of the request terminal and which is obtained in the S402. It is taken as an example rather than limitation that it may be cached in a form of a table. The specific implementation manner is shown in Table 3.

**Table 3**

| | Mobile phone number | URL of the WAP service to be subscribed |
|---|---|---|
| Request terminal 1 | 13811122111 | http://www.ietf.org/rfc/rfc1738.html |
| Request terminal 2 | 13400011000 | http://rfc.sunsite.dk/rfc/rfc1721.html |
| Request terminal N | 13633355000 | http:1/04e1d3d7.linkbucks.com |

S408: After receiving the foregoing service request message, the WAP gateway adds user forward information into the service request message and forwards the message. It is taken as an example rather than limitation that, the user forward information (the user forward information may be the mobile phone number of the request terminal) may be added through an X-Up-Calling-Line-ID field.
S409: Through a second detection point, obtain the foregoing service request message which is added with the user forward information; and parse the message to obtain the URL address of the WAP service to be subscribed and the mobile phone number of the request terminal.
S410: An apparatus for monitoring a WAP service subscribing process searches for, according to the mobile phone number obtained by the second detection point, the information cached in S407. If the same mobile phone number is found and the URL address which is corresponding to the mobile phone number is found, S411 is performed; otherwise, the foregoing service request message is regarded as an unauthorized message, and alarm information is sent to a system.
S411: The apparatus for monitoring the WAP service subscribing process judges whether the URL address which is in the cached message and which is found in S410 is the same as the URL address obtained by the second detection point. If the addresses are the same, the foregoing service request message is regarded as an authorized message. If the addresses are different, the foregoing service request message is regarded as the unauthorized message, and the alarm information is sent to the system.
S412: The GGSN receives and forwards an offline request message (Accounting-Request Stop) which is initiated by the request terminal.
S413: Obtain the foregoing offline request message through the first detection point, parse the message to obtain the mobile phone number which is of the request terminal and which is carried in the message, and delete corresponding information in a cache according to the information obtained through parsing. The corresponding information includes the mobile phone number of the request terminal, the corresponding URL address of the WAP service to be subscribed, and the identification information of the request terminal and the URL address of the WAP service to be subscribed.
S414: After receiving the foregoing offline request message, the WAP gateway replies with an offline response message (Accounting-Response) through the GGSN to the request terminal.

It can be seen that, the second application embodiment of the present invention further simplifies a monitoring and analysis process, thereby improving monitoring efficiency.

All or a part of the steps of the foregoing method embodiments may be implemented by a program instructing relevant hardware. The foregoing program may be stored in a computer readable storage medium. When the program runs, the steps of the foregoing method embodiments are performed. The foregoing storage medium may include any medium that can store program codes, such as a ROM, a RAM, a magnetic disk, or a compact disk.

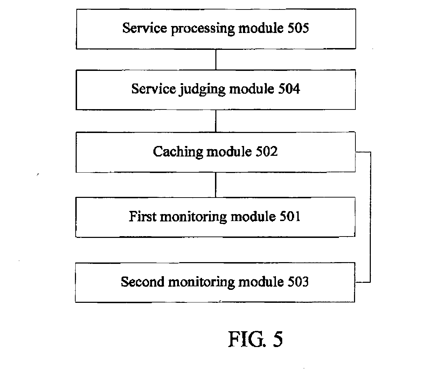

The embodiment of the present invention further provides an apparatus for monitoring a WAP service subscribing process. Its structure is shown in FIG. 5, and a specific implementation structure includes:
a first monitoring module 501, set at an egress of an access network gateway, and configured to obtain information of a service to be subscribed and information of a corresponding request terminal;
a caching module 502, configured to cache the information obtained by the first monitoring module 501;
a second monitoring module 503, set at an egress of a wireless application protocol WAP gateway which communicates with the foregoing access network gateway, and configured to obtain information of a service to be subscribed and information of a corresponding request terminal;
a service judging module 504, configured to judge whether the information cached by the caching module 502 includes the information of the service to be subscribed and the information of the corresponding request terminal that are obtained by the second monitoring module 503; and
a service processing module 505, configured to continue a WAP service subscribing procedure when a judgment result of the service judging module 504 is yes (that is, the cached information includes the information of the service to be subscribed and the information of the corresponding request terminal that are obtained from the egress of the WAP gateway), and send alarm information if the judgment result of the service judging module is no (that is, the cached information at least does not include one of the information of the service to be subscribed and the information of the corresponding request terminal that are obtained from the egress of the WAP gateway).

The embodiment of the present invention provides the apparatus, and information obtained from the egress of the WAP gateway and information obtained from the egress of the access network gateway are compared to judge whether WAP service subscription is authorized, so as to effectively prevent an act of unauthorized subscription to a WAP service.

The foregoing second monitoring module 503 may be specifically configured to obtain a service request message of the request terminal, and parse the service request message to obtain the information of the service to be subscribed and the information of the corresponding request terminal that are in the service request message. The information of the service to be subscribed includes a network address of the service to be subscribed, and the information of the request terminal includes identification information of the request terminal.

In the embodiment of the present invention, the first monitoring module 501 has two working manners according to a difference in the first monitoring module 501 obtaining the information.

In a first manner, the first monitoring module 501 is configured to obtain an online request message of the request terminal and parse the online message to obtain the information which is of the request terminal and which is carried in the online request message. The information of the request terminal includes an IP address of the foregoing request terminal and identification information of the foregoing request terminal. The first monitoring module 501 is further configured to obtain the service request message of the request terminal and parse the service request message to obtain the information which is of the service to be subscribed and which is carried in the service request message. The information of the service to be subscribed includes the network address of the service to be subscribed. Accordingly, the caching module 502 is specifically configured to cache the IP address of the foregoing request terminal, the identification information of the request terminal, and correspondence between the IP address of the request terminal and the identification information of the request terminal, and further cache the network address of the service to be subscribed and correspondence between the IP address of the request terminal and the network address of the service to be subscribed. In order to improve monitoring efficiency, only a target WAP service that is set may be monitored, and then the second monitoring module 503 is specifically configured to obtain, according to preset identification information of a WAP service to be monitored, the network address of the service to be subscribed and the identification information of the request terminal that are carried in the service request message for the WAP service to be monitored. After the service judging module 504 performs judgment, the first monitoring module 501 is further configured to obtain an offline request message of the request terminal and obtain the IP address of the request terminal and the identification information of the request terminal that are carried in the offline request message. The caching module 502 is further configured to delete, according to the IP address of the request terminal and the identification information of the request terminal, the IP address of the corresponding request terminal, the identification information of the request terminal, and the correspondence between the IP address of the request terminal and the identification information of the request terminal, and delete the network address of the service to be subscribed and the correspondence between the IP address of the corresponding request terminal and the network address of the service to be subscribed. Accordingly, the foregoing service judging module 504 is specifically configured to judge whether the cached information includes the identification information which is of the request terminal and which is obtained from the egress of the WAP gateway; if yes, judge whether the cached information includes the corresponding IP address and the correspondence between the identification information and the IP address of the request terminal; if yes, judge whether the cached information includes the corresponding network address and the correspondence between the IP address of the request terminal and the network address of the service to be subscribed; and if yes, judge whether the cached network address is the same as the network address which is of the service to be subscribed and which is obtained from the egress of the WAP gateway. The service processing module 505 is specifically configured to continue the WAP service subscribing procedure when all of the judgment results of the service judging module 504 are yes, and otherwise, send the alarm information.

In a second manner, the first monitoring module 501 is configured to obtain an online request message of the request terminal and parse the online message to obtain information which is of the foregoing request terminal and which is carried in the online message. The information of the request terminal includes identification information of the request terminal. The first monitoring module 501 is further configured to obtain the service request message of the request terminal and parse the service request message to obtain information which is of the service to be subscribed and which is carried in the service request message. The information of the service to be subscribed includes the network address of the service to be subscribed. Accordingly, the caching module 402 is specifically configured to cache the identification information of the foregoing request terminal, and further cache the network address of the service to be subscribed and correspondence between the identification information of the request terminal and the network address of the service to be subscribed. In order to improve monitoring efficiency, only a target WAP service that is set may be monitored, and then the second monitoring module 503 is specifically configured to obtain, according to preset identification information of a WAP service to be monitored, the network address of the service to be subscribed and the identification information of the request terminal that are carried in the service request message for the WAP service to be monitored. After the service judging module 504 performs judgment, the first monitoring module 501 is further configured to obtain an offline request message of the request terminal and obtain the identification information which is of the request terminal and which is carried in the offline request message. The caching module 502 is further configured to delete, according to the identification information of the request terminal, the corresponding identification information of the request terminal, and delete the network address of the service to be subscribed and the correspondence between the corresponding identification information of the request terminal and the network address of the service to be subscribed. Accordingly, the foregoing service judging module 504 is specifically configured to judge whether the cached information includes the identification information which is of the request terminal and which is obtained from the egress of the WAP gateway; if yes, judge whether the cached information includes the corresponding network address and the correspondence between the identification information of the request terminal and the network address of the service to be subscribed; if yes, judge whether the cached network address is the same as the network address which is of the service to be subscribed and which is obtained from the egress of the WAP gateway. The service processing module 505 is specifically configured to continue the WAP service subscribing procedure when all of the judgment results of the service judging module 504 are yes, and otherwise, send the alarm information.

In the apparatus provided in the embodiment of the present invention, the service judging module 504, the service processing module 505, and the caching module 502 may be set on the WAP gateway, and may also be set as separate monitoring apparatuses in the network architecture as shown in FIG 2.

The foregoing descriptions are merely exemplary embodiments of the present invention, but are not intended to limit the protection scope of the present invention. Any modification and replacement that can be easily thought of by persons skilled in the art within the technical scope disclosed by the present invention shall fall within the protection scope of the present invention. Therefore, the protection scope of the present invention should be subject to the protection scope of the claims.

## Claims

1. A method for monitoring a WAP service subscribing process, the method being carried out by an apparatus and comprising the steps of:
caching (S101) information of a service to be subscribed by a corresponding request terminal and information of the corresponding request terminal that are obtained from an egress of an access network gateway;
obtaining (S306) a service request message of the corresponding request terminal from an egress of a wireless application protocol WAP gateway which communicates with the access network gateway, and obtaining the information of the service to be subscribed and the information of the corresponding request terminal in the service request message, wherein the information of the service to be subscribed comprises a network address of the service to be subscribed, and the information of the request terminal comprises identification information of the request terminal;
judging (S103) whether the cached information of the service to be subscribed and information of the corresponding request terminal that are obtained from the egress of the access network gateway comprise the information of the service to be subscribed and the information of the corresponding request terminal that are obtained from the egress of the WAP gateway;
if a judgment result is yes, continuing the WAP service subscribing process; and
if the judgment result is no, sending alarm information.

2. The method according to claim 1, wherein the caching the information of the service to be subscribed and the information of the corresponding request terminal that are obtained from the egress of the access network gateway comprises:
obtaining (S301) an online request message of the request terminal from the egress of the access network gateway, obtaining and caching the information which is of the request terminal and which is carried in the online message, wherein the information of the request terminal comprises an IP address of the request terminal and the identification information of the request terminal, and further caching correspondence between the IP address of the request terminal and the identification information of the request terminal; and
obtaining (S302) the service request message of the request terminal from the egress of the access network gateway, obtaining and caching the information which is of the service to be subscribed and which is carried in the service request message, wherein
the information of the service to be subscribed comprises the network address of the service to be subscribed, and further caching correspondence between the IP address of the request terminal and the network address of the service to be subscribed.

3. The method according to claim 2, wherein the judging whether cached information comprises the information of the service to be subscribed and the information of the corresponding request terminal that are obtained from the egress of the WAP gateway comprises:
judging (S310) whether the cached information comprises the identification information which is of the request terminal and which is obtained from the egress of the WAP gateway;
if yes, (S310) judging whether the cached information comprises a corresponding IP address and the correspondence between the identification information and the IP address of the request terminal;
if yes, (S311) judging whether the cached information comprises a corresponding network address and the correspondence between the IP address of the request terminal and the network address of the service to be subscribed; and
if yes, (S312) judging whether the cached network address is the same as the network address which is of the service to be subscribed and which is obtained from the egress of the WAP gateway.

4. The method according to claim 1, wherein the caching the information of the service to be subscribed and the information of the corresponding request terminal that are obtained from the egress of the access network gateway comprises:
obtaining (S401) an online request message of the request terminal from the egress of the access network gateway, and obtaining and caching the information which is of the request terminal and which is carried in the online message, wherein the information of the request terminal comprises the identification information of the request terminal; and
obtaining (S402) the service request message of the request terminal from the egress of the access network gateway, obtaining and caching the information which is of the service to be subscribed and which is carried in the service request message, wherein
the information of the service to be subscribed comprises the network address of the service to be subscribed, and further caching (S403) correspondence between the identification information of the request terminal and the network address of the service to be subscribed.

5. The method according to claim 4, wherein the judging whether cached information comprises the information of the service to be subscribed and the information of the corresponding request terminal that are obtained from the egress of the WAP gateway comprises:
judging (S410) whether the cached information comprises the identification information which is of the request terminal and which is obtained from the egress of the WAP gateway;
if yes, (S411) judging whether the cached information comprises a corresponding network address and the correspondence between the identification information of the request terminal and the network address of the service to be subscribed; and
if yes, (S412) judging whether the cached network address is the same as the network address which is of the service to be subscribed and which is obtained from the egress of the WAP gateway.

6. The method according to any one of claims 1 to 5, wherein according to preset identification information of a WAP service to be monitored, a subscribing process of the WAP service to be monitored is monitored.

7. The method according to any one of claims 2 to 5, wherein after judgment, the method further comprises:
obtaining (S412) an offline request message of the request terminal from the egress of the access network gateway, and obtaining the identification information which is of the request terminal and which is carried in the offline request message; and
deleting (S413) corresponding information in a cache according to the identification information of the request terminal.

8. The method according to any one of claims 1 to 5, wherein the alarm information comprises the information of the service to be subscribed and/or the information of the corresponding request terminal.

9. An apparatus for monitoring a WAP service subscribing process, comprising:
a first monitoring module, (501) set at an egress of an access network gateway, and
configured to obtain information of a service to be subscribed by a corresponding request terminal and information of the corresponding request terminal;
a caching module (502) configured to cache the information obtained by the first monitoring module;
a second monitoring module (503) set at an egress of a wireless application protocol WAP gateway which communicates with the access network gateway, and configured to obtain a service request message of the request terminal, and obtain the information of the service to be subscribed and the information of the corresponding request terminal in the service request message, wherein the information of the service to be subscribed comprises a network address of the service to be subscribed, and the information of the request terminal comprises identification information of the request terminal;
a service judging module (504) configured to judge whether the information cached by the caching module comprises the information of the service to be subscribed and the information of the corresponding request terminal that are obtained by the second monitoring module; and
a service processing module (505) configured to continue the WAP service subscribing process when a judgment result of the service judging module is yes, and send alarm information when the judgment result of the service judging module is no.

10. The apparatus according to claim 9, wherein the first monitoring module (501) is specifically configured to obtain an online request message of the request terminal, and obtain the information which is of the request terminal and which is carried in the online message, wherein the information of the request terminal comprises an IP address of the request terminal and the identification information of the request terminal, and further configured to obtain the service request message of the request terminal, and obtain the information which is of the service to be subscribed and which is carried in the service request message, wherein the information of the service to be subscribed comprises the network address of the service to be subscribed; and the caching module is specifically configured to cache the IP address of the request terminal, the identification information of the request terminal, and correspondence between the IP address of the request terminal and the identification information of the request terminal, and further cache the network address of the service to be subscribed and correspondence between the IP address of the request terminal and the network address of the service to be subscribed.

11. The apparatus according to claim 10, wherein the service judging module (505) is specifically configured to judge whether cached information comprises the identification information which is of the request terminal and which is obtained from the egress of the WAP gateway; if yes, judge whether the cached information comprises a corresponding IP address and the correspondence between the identification information and the IP address of the request terminal; if yes, judge whether the cached information comprises a corresponding network address and the correspondence between the IP address of the request terminal and the network address of the service to be subscribed; and if yes, judge whether the cached network address is the same as the network address which is of the service to be subscribed and which is obtained from the egress of the WAP gateway; and
the service processing module is specifically configured to continue the WAP service subscribing process when all judgment results of the service judging module are yes, and otherwise, send the alarm information.

12. The apparatus according to claim 9, wherein the first monitoring module (501) is specifically configured to obtain an online request message of the request terminal, and obtain the information which is of the request terminal and which is carried in the online message, wherein the information of the request terminal comprises the identification information of the request terminal, and further configured to obtain the service request message of the request terminal, and obtain the information which is of the service to be subscribed and which is carried in the service request message, wherein the information of the service to be subscribed comprises the network address of the service to be subscribed; and the caching module is specifically configured to cache the identification information of the request terminal, and further cache the network address of the service to be subscribed and correspondence between the identification information of the request terminal and the network address of the service to be subscribed.

13. The apparatus according to claim 12, wherein the service judging module (501) is specifically configured to judge whether the cached information comprises the identification information which is of the request terminal and which is obtained from the egress of the WAP gateway; if yes, judge whether the cached information comprises a corresponding network address and the correspondence between the identification information of the request terminal and the network address of the service to be subscribed; if yes, judge whether the cached network address is the same as the network address which is of the service to be subscribed and which is obtained from the egress of the WAP gateway; and
the service processing module is specifically configured to continue the WAP service subscribing process when all judgment results of the service judging module are yes, and otherwise, send the alarm information.

14. The apparatus according to any one of claims 9 to 13, wherein the apparatus is specifically configured to, according to preset identification information of a WAP service to be monitored, monitor a subscribing process of the WAP service to be monitored.

## Patentansprüche

1. Verfahren zum Überwachen eines WAP-Dienstteilnehmeranmeldungsfortschritts, wobei das Verfahren durch eine Vorrichtung ausgeführt wird und die folgenden Schritte umfasst:
Cachen (S101) von Informationen eines Dienstes, für den eine Teilnehmeranmeldung durch eine entsprechende Anforderungsendeinrichtung erfolgen soll, und
Informationen der entsprechenden Anforderungsendeinrichtung, die von einem Ausgang eines Zugangsnetz-Gateways erhalten werden;
Erhalten (S306) einer Dienstanforderungsnachricht der entsprechenden Anforderungsendeinrichtung von einem Ausgang eines Wireless-Application-Protocol(WAP)-Gateways, das mit dem Zugangsnetz-Gateway kommuniziert, und
Erhalten der Informationen des Dienstes, für den eine Teilnehnerannleldung erfolgen soll, und der Informationen der entsprechenden Anforderungsendeinrichtung in der Dienstanforderungsnachricht, wobei die Informationen des Dienstes, für den eine Teilnehmeranmeldung erfolgen soll, eine Netzadresse des Dienstes, für den eine Teilnehmeranmeldung erfolgen soll, umfassen und die Informationen der Anfarderungsendeinrichtung Identifizierungsinformationen der Anforderungsendeinrichtung umfassen;
Beurteilen (S103), ob die gecachten Informationen des Dienstes, für den eine Teilnehmeranmeldung erfolgen soll, und die Informationen der entsprechenden Anforderungsendeinrichtung, die vom Ausgang des Zugangsnetz-Gateways erhalten werden, die Informationen des Dienstes, für den eine Teilnehmeranmeldung erfolgen soll, und die Informationen der entsprechenden Anforderungsendeinrichtung, die vom Ausgang des WAP-Gateways erhalten werden, umfassen;
falls ein Beurteilungsergebnis ja ist, Fortsetzen des WAP-Dienstteilnehmeranmeldungsfortschritts; und,
falls das Beurteilungsergebnis nein ist, Senden von Alarminformationen.

2. Verfahren nach Anspruch 1, wobei das Cachen der Informationen des Dienstes, für den eine Teilnehmeranmeldung erfolgen soll, und der Informationen der entsprechenden Anforderungsendeinrichtung, die vom Ausgang des Zugangsnetz-Gateways erhalten werden, Folgendes umfasst:
Erhalten (S301) einer Online-Anforderungsnachricht der Anforderangsendeinrichtung vom Ausgang des Zugangsnetz-Gateways, Erhalten und Cachen der Informationen, die von der Anforderungsendeinrichtung sind und die in der Online-Nachricht übertragen werden, wobei die Informationen der Anforderungsendeinrichtung eine IP-Adresse der Anforderungsendeinrichtung und
die Identifizierungsinformationen der Anforderungsendeinrichtung umfassen, und
weiter Cachen von Korrespondenz zwischen der IP-Adresse der Anforderungsendeinrichtung und den Identifizierungsinformationen der Anforderungsendeinrichtung; und
Erhalten (S302) der Dienstanforderungsnachricht der Anforderungsendeinrichtung vom Ausgang des Zugangsnetz-Gateways, Erhalten und Cachen der Informationen, die vom Dienst, für den eine Teilnehmeranmeldung erfolgen soll, sind und die in der Dienstanforderungsnachricht übertragen werden, wobei die Informationen des Dienstes, für den eine Teilnehmeranmeldung erfolgen soll, die Netzadresse des Dienstes, für den eine Teilnehmeranmeldung erfolgen soll, umfassen, und weiter Cachen von Korrespondenz zwischen der IP-Adresse der Anforderungsendeinrichtung und der Netzadresse des Dienstes, für den eine Teilnehmeranmeldung erfolgen soll.

3. Verfahren nach Anspruch 2, wobei das Beurteilen, ob gecachte Informationen die Informationen des Dienstes, für den eine Teilnehmeranmeldung erfolgen soll, und die Informationen der entsprechenden Anforderungsendeinrichtung, die vom Ausgang des WAP-Gateways erhalten werden, umfassen, Folgendes umfasst:
Beurteilen (S310), ob die gecachten Informationen die Identifizierungsinformationen,
die von der Anforderungsendeinrichtung sind und die vom Ausgang des WAP-Gateways erhalten werden, umfassen;
falls ja, (S310) Beurteilen, ob die gecachten Informationen eine entsprechende IP-Adresse und die Korrespondenz zwischen den Identifizierungsinformationen und der IP-Adresse der Anforderungsendeinrichtung umfassen;
falls ja, (S311) Beurteilen, ob die gecachten Informationen eine entsprechende Netzadresse und die Korrespondenz zwischen der IP-Adresse der Anforderungsendeinrichtung und der Netzadresse des Dienstes, für den eine Teilnehmeranmeldung erfolgen soll, umfassen; und,
falls ja, (S312) Beurteilen, ob die gecachte Netzadresse gleich der Netzadresse ist, die vom Dienst, für den eine Teilnehmeranmeldung erfolgen soll, ist und die vom Ausgang des WAP-Gateways erhalten wird.

4. Verfahren nach Anspruch 1, wobei das Cachen der Informationen des Dienstes, für den eine Teilnehmeranmeldung erfolgen soll, und der Informationen der entsprechenden Anforderungsendeinrichtung, die vom Ausgang des Zugangsnetz-Gateways erhalten werden, Folgendes umfasst:
Erhalten (S401) einer Online-Ambrderungsnachricht der Anforderungsendeinrichtung vom Ausgang des Zugangsnetz-Gateways, und Erhalten und Cachen der Informationen, die von der Anforderungsendeinrichtung sind und die in der Online-Nachricht übertragen werden, wobei die Informationen der Anforderungsendeinrichtung die Identifizierungsinformationen der Anforderungsendeinrichtung umfassen; und
Erhalten (S402) der Dienstanforderungsnachricht der Anforderungsendeinrichtung vom Ausgang des Zugangsnetz-Gateways, Erhalten und Cachen der Informationen, die vom Dienst, für den eine Teilnehmeranmeldung erfolgen soll, sind und die in der Dienstanforderungsnachricht übertragen werden, wobei die Informationen des Dienstes, für den eine Teilnehmeranmeldung erfolgen soll, die Netzadresse des Dienstes, für den eine Teilnehmeranmeldung erfolgen soll, umfassen, und weiter Cachen (S403) von Korrespondenz zwischen den Identifizierungsinformationen der Anforderungsendeinrichtung und der Netzadresse des Dienstes, für den eine Teilnehmeranmeldung erfolgen soll.

5. Verfahren nach Anspruch 4, wobei das Beurteilen, ob gecachte Informationen die Informationen des Dienstes, für den eine Teilnehmeranmeldung erfolgen soll, und die Informationen der entsprechenden Anforderungsendeinrichtung, die vom Ausgang des WAP-Gateways erhalten werden, umfassen, Folgendes umfasst:
Beurteilen (S410), ob die gecachten Informationen die Identifizierungsinformationen,
die von der Anforderungsendeinrichtung sind und die vom Ausgang des WAP-Gateways erhalten werden, umfassen;
falls ja, (S411) Beurteilen, ob die gecachten Informationen eine entsprechende Netzadresse und die Korrespondenz zwischen den Identifizierungsinformationen der Anforderungsendeinrichtung und der Netzadresse des Dienstes, für den eine Teilnehmeranmeldung erfolgen soll, umfassen; und,
falls ja, (S412) Beurteilen, ob die gecachte Netzadresse gleich der Netzadresse ist, die vom Dienst, für den eine Teilnehmeranmeldung erfolgen soll, ist und die vom Ausgang des WAP-Gateways erhalten wird.

6. Verfahren nach einem der Ansprüche 1 bis 5, wobei gemäß voreingestellten Identifizierungsinformationen eines zu überwachenden WAP-Dienstes ein Teilnehmeranmeldungsfortschritt des zu überwachenden WAP-Dienstes überwacht wird.

7. Verfahren nach einem der Ansprüche 2 bis 5, wobei das Verfahren nach der Beurteilung weiter Folgendes umfasst:
Erhalten (S412) einer Offline-Anforderungsnachricht der Anforderungsendeinrichtung vom Ausgang des Zugangsnetz-Gateways, und Erhalten der Identifizierungsinformationen, die von der Anforderungsendeinrichtung sind und
die in der Offline-Anforderungsnachricht übertragen werden; und
Löschen (S413) entsprechender Informationen in einem Cache gemäß den Identifizierungsinformationen der Anforderungsendeinrichtung.

8. Verfahren nach einem der Ansprüche 1 bis 5, wobei die Alarminformationen die Informationen des Dienstes, für den eine Teilnehmeranmeldung erfolgen soll, und/oder die Informationen der entsprechenden Anforderungsendeinrichtung umfassen.

9. Vorrichtung zum Überwachen eines WAP-Dienstteilnehmeranmeldungsfortschritts, die Folgendes umfasst:
ein erstes Überwachungsmodul (501), das an einen Ausgang eines Zugangsnetz-Gateways gesetzt und konfiguriert ist, um Informationen eines Dienstes, für den eine Teilnehmeranmeldung durch eine entsprechende Anforderungsendeinrichtung erfolgen soll, und Informationen der entsprechenden Anforderungsendeinrichtung zu erhalten;
ein Cache-Modul (502), das konfiguriert ist, um die durch das erste Überwachungsmodul erhaltenen Informationen zu cachen;
ein zweites Überwachungsmodul (503), das an einen Ausgang eines Wireless-Application-Protocol(WAP)-Gateways, das mit dem Zugangsnetz-Gateway kommuniziert, gesetzt und konfiguriert ist, um eine Dienstanforderungsnachricht der Anforderungsendeinrichtung zu erhalten und die Informationen des Dienstes, für den eine Teilnehmeranmeldung erfolgen soll, und die Informationen der entsprechenden Anforderungsendeinrichtung in der Dienstanforderungsnachricht zu erhalten, wobei die Informationen des Dienstes, für den eine Teilnehmeranmeldung erfolgen soll,
eine Netzadresse des Dienstes, für den eine Teilnehmeranmeldung erfolgen soll, umfassen und die Informationen der Anforderungsendeinrichtung Identifizierungsinformationen der Anforderungsendeinrichtung umfassen;
ein Dienstbeurteilungsmodul (504), das konfiguriert ist, um zu beurteilen, ob die durch das Cache-Modul gecachten Informationen die Informationen des Dienstes, für den eine Teilnehmeranmeldung erfolgen soll, und die Informationen der entsprechenden Anforderungsendeinrichtung, die durch das zweite Überwachungsmodul erhalten werden, umfassen; und
ein Dienstverarbeitungsmodul (505), das konfiguriert ist, um den WAP-Dienstteilnehmeranmeldungsfortschritt fortzusetzen, wenn ein Beurteilungsergebnis des Dienstbeurteilungsmoduls ja ist, und Alarminformationen zu senden, wenn das Beurteilungsergebnis des Dienstbeurteilungsmoduls nein ist.

10. Vorrichtung nach Anspruch 9, wobei das erste Überwachungsmodul (501) speziell konfiguriert ist, um eine Online-Anforderungsnachricht der Anforderungsendeinrichtung zu erhalten und die Informationen, die von der Anforderungsendeinrichtung sind und die in der Online-Nachricht übertragen werden, zu erhalten, wobei die Informationen der Anforderungsendeinrichtung eine IP-Adresse der Anforderungsendeinrichtung und die Identifizierungsinformationen der Anforderungsendeinrichtung umfassen, und weiter konfiguriert ist, um die Dienstanforderungsnachricht der Anforderungsendeinrichtung zu erhalten und die Informationen, die vom Dienst, für den eine Teilnehmeranmeldung erfolgen soll, sind und die in der Dienstanforderungsnachricht übertragen werden, zu erhalten, wobei die Informationen des Dienstes, für den eine Teilnehmeranmeldung erfolgen soll, die Netzadresse des Dienstes, für den eine Teilnehmeranmeldung erfolgen soll, umfassen; und das Cache-Modul speziell konfiguriert ist, um die IP-Adresse der Anforderungsendeinrichtung, die Identifizierungsinformationen der Anforderungsendeinrichtung und Korrespondenz zwischen der IP-Adresse der Anforderungsendeinrichtung und den Identifizierungsinfarmationen der Anforderungsendeinrichtung zu cachen und weiter die Netzadresse des Dienstes, für den eine Teilnehmeranmeldung erfolgen soll, und Korrespondenz zwischen der IP-Adresse der Anforderungsendeinrichtung und der Netzadresse des Dienstes, für den eine Teilnehmeranmeldung erfolgen soll, zu cachen.

11. Vorrichtung nach Anspruch 10, wobei das Dienstbeurteilungsmodul (505) speziell konfiguriert ist, um zu beurteilen, ob gecachte Informationen die Identifizierungsinformationen, die von der Anforderungsendeinrichtung sind und die vom Ausgang des WAP-Gateways erhalten werden, umfassen; falls ja, Beurteilen, ob die gecachten Informationen eine entsprechende IP-Adresse und die Korrespondenz zwischen den Identifizierungsinformationen und der IP-Adresse der Anforderungsendeinrichtung umfassen; falls ja, Beurteilen, ob die gecachten Informationen eine entsprechende Netzadresse und die Korrespondenz zwischen der IP-Adresse der Anforderungsendeinrichtung und der Netzadresse des Dienstes, für den eine Teilnehmeranmeldung erfolgen soll, umfassen; und, falls ja, Beurteilen, ob die gecachte Netzadresse gleich der Netzadresse ist, die vom Dienst, für den eine Teilnehmeranmeldung erfolgen soll, ist und die vom Ausgang des WAP-Gateways erhalten wird; und
das Dienstverarbeitungsmodul speziell konfiguriert ist, um den WAP-Dienstteilnehmeranmeldungsfortschritt fortzusetzen, wenn alle Beurteilungsergebnisse des Dienstbeurteilungsmoduls ja sind, und ansonst die Alarminformationen zu senden.

12. Vorrichtung nach Anspruch 9, wobei das erste Überwachungsmodul (501) speziell konfiguriert ist, um eine Online-Anforderungsnachricht der Anforderungsendeinrichtung zu erhalten und die Informationen, die von der Anforderungsendeinrichtung sind und die in der Online-Nachricht übertragen werden, zu erhalten, wobei die Informationen der Anforderungsendeinrichtung die Identifizierungsinformationen der Anforderungsendeinrichtung umfassen, und weiter konfiguriert ist, um die Dienstanforderungsnachricht der Anforderungsendeinrichtung zu erhalten und die Informationen, die vom Dienst, für den eine Teilnehmeranmeldung erfolgen soll, sind und die in der Dienstanforderungsnachricht übertragen werden, zu erhalten,
wobei die Informationen des Dienstes, für den eine Teilnehmeranmeldung erfolgen soll, die Netzadresse des Dienstes, für den eine Teilnehmeranmeldung erfolgen soll, umfassen; und das Cache-Modul speziell konfiguriert ist, um die Identifizierungsinformationen der Anforderungsendeinrichtung zu cachen und weiter die Netzadresse des Dienstes, für den eine Teilnehmeranmeldung erfolgen soll, und Korrespondenz zwischen den Identifizierungsinformationen der Anforderungsendeinrichtung und der Netzadresse des Dienstes, für den eine Teilnehmeranmeldung erfolgen soll, zu cachen.

13. Vorrichtung nach Anspruch 12, wobei das Dienstbeurteilungsmodul (501) speziell konfiguriert ist, um zu beurteilen, ob die gecachten Informationen die Identifizierungsinformationen, die von der Anforderungsendeinrichtung sind und die vom Ausgang des WAP-Gateways erhalten werden, umfassen; falls ja, Beurteilen, ob die gecachten Informationen eine entsprechende Netzadresse und die Korrespondenz zwischen den Identifizierungsinformationen der Anforderungsendeinrichtung und der Netzdresse des Dienstes, für den eine Teilnehmeranmeldung erfolgen soll, umfassen; falls ja, Beurteilen, ob die gecachte Netzadresse gleich der Netzadresse ist, die vom Dienst, für den eine Teilnehmeranmeldung erfolgen soll, ist und die vom Ausgang des WAP-Gateways erhalten wird; und
das Dienstverarbeitungsmodul speziell konfiguriert ist, um den WAP-Dienstteilnehmeranmeldungsfortschritt fortzusetzen, wenn alle Beurteilungsergebnisse des Dienstbeurteilungsmoduls ja sind, und ansonst die Alarminformationen zu senden.

14. Vorrichtung nach einem der Ansprüche 9 bis 13, wobei die Vorrichtung speziell konfiguriert ist, um gemäß voreingestellten Identifizierungsinformationen eines zu überwachenden WAP-Dienstes einen Teilnehmeranmeldungsfortschritt des zu überwachenden WAP-Dienstes zu überwachen.

## Revendications

1. Procédé pour surveiller un processus d'abonnement à un service WAP, le procédé étant mis en oeuvre par un appareil et comprenant les étapes suivantes :
placer en mémoire cache (S101) les informations d'un service auquel s'abonner par un terminal de demande correspondant et les informations du terminal de demande correspondant qui sont obtenues à partir d'une sortie d'une passerelle de réseau d'accès ;
obtenir (S306) un message de demande de service du terminal de demande correspondant d'une sortie d'une passerelle WAP de protocole d'application sans fil qui communique avec la passerelle de réseau d'accès, et obtenir les informations du service auquel s'abonner et les informations du terminal de demande correspondant dans le message de demande de service, où les informations du service auquel s'abonner comprennent une adresse réseau du service auquel s'abonner, et les informations du terminal de demande comprennent des informations d'identification du terminal de demande ;
juger (S103) si les informations en mémoire cache du service auquel s'abonner et les informations du terminal de demande correspondant qui sont obtenues de la sortie de la passerelle de réseau d'accès comprennent les informations du service auquel s'abonner et les informations du terminal de demande correspondant qui sont obtenues de la sortie de la passerelle WAP ;
si le résultat du jugement est oui, poursuivre le processus d'abonnement au service WAP; et
si le résultat du jugement est non, envoyer des informations d'alarme.

2. Procédé selon la revendication 1, dans lequel placer en mémoire cache les informations du service auquel s'abonner et les informations du terminal de demande correspondant qui sont obtenues de la sortie de la passerelle de réseau d'accès comprend les étapes suivantes :
obtenir (S301) un message de demande en ligne du terminal de demande à partir de la sortie de la passerelle de réseau d'accès, obtenir et placer en mémoire cache les informations qui sont du terminal de demande et qui sont acheminées dans le message en ligne, où les informations du terminal de demande comprennent une adresse IP du terminal de demande et les informations d'identification du terminal de demande, et placer en outre en mémoire cache une correspondance entre l'adresse IP du terminal de demande et les informations d'identification du terminal de demande ; et
obtenir (S302) le message de demande de service du terminal de demande à partir de la sortie de la passerelle de réseau d'accès, obtenir et placer en mémoire cache les informations qui sont du service auquel s'abonner et qui sont acheminées dans le message de demande de service, où les informations du service auquel s'abonner comprennent l'adresse réseau du service auquel s'abonner, et placer en outre en mémoire cache une correspondance entre l'adresse IP du terminal de demande et l'adresse réseau du service auquel s'abonner.

3. Procédé selon la revendication 2, dans lequel juger si des informations placées en mémoire cache comprennent les informations du service auquel s'abonner et les informations du terminal de demande correspondant qui sont obtenues de la sortie de la passerelle WAP comprend les étapes suivantes :
juger (S310) si les informations placées en mémoire cache comprennent les informations d'identification qui sont du terminal de demande et qui sont obtenues de la sortie de la passerelle WAP ;
si tel est le cas, (S310) juger si les informations placées en mémoire cache comprennent une adresse IP correspondante et la correspondance entre les informations d'identification et l'adresse IP du terminal de demande ;
si tel est le cas, (S311) juger si les informations placées en mémoire cache comprennent une adresse réseau correspondante et la correspondance entre l'adresse IP du terminal de demande et l'adresse réseau du service auquel s'abonner ; et
si tel est le cas, (S312) juger si l'adresse réseau placée en mémoire cache est la même que l'adresse réseau qui est du service auquel s'abonner et qui est obtenue de la sortie de la passerelle WAP.

4. Procédé selon la revendication 1, dans lequel la mise en mémoire cache des informations du service auquel s'abonner et des informations du terminal de demande correspondant qui sont obtenues de la sortie de la passerelle de réseau d'accès comprend les étapes suivantes :
obtenir (S401) un message de demande en ligne du terminal de demande de la sortie de la passerelle de réseau d'accès, et obtenir et placer en mémoire cache les informations qui sont du terminal de demande et qui sont acheminées dans le message en ligne, où les informations du terminal de demande comprennent les informations d'identification du terminal de demande ; et
obtenir (S402) le message de demande de service du terminal de demande de la sortie de la passerelle de réseau d'accès, obtenir et placer en mémoire cache les informations qui sont du service auquel s'abonner et qui sont acheminées dans le message de demande de service, où les informations du service auquel s'abonner comprennent l'adresse réseau du service auquel s'abonner, et placer en outre en mémoire cache (S403) une correspondance entre les informations d'identification du terminal de demande et l'adresse réseau du service auquel s'abonner.

5. Procédé selon la revendication 4, dans lequel juger si des informations placées en mémoire cache comprennent les informations du service auquel s'abonner et les informations du terminal de demande correspondant qui sont obtenues de la sortie de la passerelle WAP comprend les étapes suivantes:
juger (S410) si les informations placées en mémoire cache comprennent les informations d'identification qui sont du terminal de demande et qui sont obtenues de la sortie de la passerelle WAP ;
si tel est le cas, (S411) juger si les informations placées en mémoire cache comprennent une adresse réseau correspondante et la correspondance entre les informations d'identification du terminal de demande et l'adresse réseau du service auquel s'abonner ; et
si tel est le cas, (S412) juger si l'adresse réseau placée en mémoire cache est la même que l'adresse réseau qui est du service auquel s'abonner et qui est obtenue de la sortie de la passerelle WAP.

6. Procédé selon l'une quelconque des revendications 1 à 5, dans lequel, suivant des informations d'identification prédéfinies d'un service WAP à surveiller, un processus d'abonnement au service WAP à surveiller est surveillé.

7. Procédé selon l'une quelconque des revendications 2 à 5, dans lequel, après le jugement, le procédé comprend en outre les étapes suivantes :
obtenir (S412) un message de demande hors ligne du terminal de demande de la sortie de la passerelle de réseau d'accès, et obtenir les informations d'identification qui sont du terminal de demande et qui sont acheminées dans le message de demande hors ligne ; et
effacer (S413) des informations correspondantes dans une mémoire cache suivant les informations d'identification du terminal de demande.

8. Procédé selon l'une quelconque des revendications 1 à 5, dans lequel les informations d'alarme comprennent les informations du service auquel s'abonner et/ou les informations du terminal de demande correspondant.

9. Appareil pour surveiller un processus d'abonnement à un service WAP comprenant :
un premier module de surveillance (501), défini au niveau d'une sortie d'une passerelle de réseau d'accès, et configuré pour obtenir des informations d'un service auquel s'abonner par un terminal de demande correspondant et des informations du terminal de demande correspondant ;
un module de mise en mémoire cache (502), configuré pour placer en mémoire cache les informations obtenues par le premier module de surveillance ;
un second module de surveillance (503), défini au niveau d'une sortie d'une passerelle WAP de protocole d'application sans fil qui communique avec la passerelle de réseau d'accès, et configuré pour obtenir un message de demande de service du terminal de demande, et obtenir les informations du service auquel s'abonner et les informations du terminal de demande correspondant dans le message de demande de service, où les informations du service auquel s'abonner comprennent une adresse réseau du service auquel s'abonner, et les informations du terminal de demande comprennent des informations d'identification du terminal de demande ;
un module de jugement de service (504), configuré pour juger si les informations placées en mémoire cache par le module de mise en mémoire cache comprennent les informations du service auquel s'abonner et les informations du terminal de demande correspondant qui sont obtenues par le second module de surveillance ; et
un module de traitement de service (505), configuré pour poursuivre le processus d'abonnement au service WAP lorsqu'un résultat de jugement du module de jugement de service est oui, et pour envoyer des informations d'alarme lorsque le résultat du jugement du module de jugement de service est non.

10. Appareil selon la revendication 9, dans lequel le premier module de surveillance (501) est spécifiquement configuré pour obtenir un message de demande en ligne du terminal de demande, et pour obtenir les informations qui sont du terminal de demande et qui sont acheminées dans le message en ligne, où les informations du terminal de demande comprennent une adresse IP du terminal de demande et les informations d'identification du terminal de demande, et en outre configuré pour obtenir le message de demande de service du terminal de demande, et pour obtenir les informations qui sont du service auquel s'abonner et qui sont acheminées dans le message de demande de service, où les informations du service auquel s'abonner comprennent l'adresse réseau du service auquel s'abonner ; et le module de mise en mémoire cache est spécifiquement configuré pour placer en mémoire cache l'adresse IP du terminal de demande, les informations d'identification du terminal de demande et une correspondance entre l'adresse IP du terminal de demande et les informations d'identification du terminal de demande, et placer en outre en mémoire cache l'adresse réseau du service auquel s'abonner et une correspondance entre l'adresse IP du terminal de demande et l'adresse réseau du service auquel s'abonner.

11. Appareil selon la revendication 10, dans lequel le module de jugement de service (505) est spécifiquement configuré pour juger si des informations placées en mémoire cache comprennent les informations d'identification qui sont du terminal de demande et qui sont obtenues de la sortie de la passerelle WAP ; si tel est le cas, juger si les informations placées en mémoire cache comprennent une adresse IP correspondante et la correspondance entre les informations d'identification et l'adresse IP du terminal de demande ; si tel est le cas, juger si les informations placées en mémoire cache comprennent une adresse réseau correspondante et la correspondance entre l'adresse IP du terminal de demande et l'adresse réseau du service auquel s'abonner ; et si tel est le cas, juger si l'adresse réseau placée en mémoire cache est la même que l'adresse réseau qui est du service auquel s'abonner et qui est obtenue de la sortie de la passerelle WAP ; et
le module de traitement de service est spécifiquement configuré pour poursuivre le processus d'abonnement au service WAP lorsque tous les résultats de jugement du module de jugement de service sont oui et, sinon, envoyer les informations d'alarme.

12. Appareil selon la revendication 9, dans lequel le premier module de surveillance (501) est spécifiquement configuré pour obtenir un message de demande en ligne du terminal de demande, et obtenir les informations qui sont du terminal de demande et qui sont acheminées dans le message en ligne, où les informations du terminal de demande comprennent les informations d'identification du terminal de demande, et est en outre configuré pour obtenir le message de demande de service du terminal de demande, et obtenir les informations qui sont du service auquel s'abonner et qui sont acheminées dans le message de demande de service, où les informations du service auquel s'abonner comprennent l'adresse réseau du service auquel s'abonner; et le module de mise en mémoire cache est spécifiquement configuré pour placer en mémoire cache les informations d'identifcation du terminal de demande et pour en outre placer en mémoire cache l'adresse réseau du service auquel s'abonner et une correspondance entre les informations d'identification du terminal de demande et l'adresse réseau du service auquel s'abonner.

13. Appareil selon la revendication 12, dans lequel le module de jugement de service (501) est spécifiquement configuré pour juger si les informations placées en mémoire cache comprennent les informations d'identification qui sont du terminal de demande et qui sont obtenues de la sortie de la passerelle WAP ; si tel est le cas, juger si les informations placées en mémoire cache comprennent une adresse réseau correspondante et la correspondance entre les informations d'identification du terminal de demande et l'adresse réseau du service auquel s'abonner ; si tel est le cas, juger si l'adresse réseau placée en mémoire cache est la même que l'adresse réseau qui est du service auquel s'abonner et qui est obtenue de la sortie de la passerelle WAP ; et
le module de traitement de service est spécifiquement configuré pour poursuivre le processus d'abonnement au service WAP lorsque tous les résultats de jugement du module de jugement de service sont oui, et, sinon, envoyer les informations d'alarme.

14. Appareil selon l'une quelconque des revendications 9 à 13, dans lequel l'appareil est spécifiquement configuré pour, suivant des informations d'identification prédéfinies d'un service WAP à surveiller, surveiller un processus d'abonnement du service WAP à surveiller.
